(19) Europäisches Patentamt
European Patent Office
Office européen des brevets

(11) **EP 4 120 594 A1**

(12) **EUROPÄISCHE PATENTANMELDUNG**

(43) Veröffentlichungstag:
**18.01.2023 Patentblatt 2023/03**

(21) Anmeldenummer: **21186091.1**

(22) Anmeldetag: **16.07.2021**

(51) Internationale Patentklassifikation (IPC):
***H04L* /(2006.01)**

(52) Gemeinsame Patentklassifikation (CPC):
**H04L 67/12; H04L 69/165; H04L 69/18**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **VOLKSWAGEN AG**
**38440 Wolfsburg (DE)**

(72) Erfinder:
• **Theimer, Wolfgang**
**44879 Bochum (DE)**
• **Deharde, Marc**
**44137 Dortmund (DE)**
• **Priebe, Matthias**
**44137 Dortmund (DE)**

(54) **VERFAHREN ZUM AUSWÄHLEN EINES KOMMUNIKATIONSPROTOKOLLS FÜR EINE DATENÜBERTRAGUNG**

(57) Die Erfindung betrifft ein Verfahren zum Auswählen eines Kommunikationsprotokolls (KM) für eine Datenübertragung (D), insbesondere zwischen einem Fahrzeug (100) und einer externen IT-Infrastruktur (200), aufweisend:
- Überprüfen der Datenübertragung (D) in Bezug auf ein Übertragungsmuster (M),
- Zuordnen mindestens eines korrespondierenden Kommunikationsprotokolls (KM), insbesondere einer korrespondierenden Kommunikationsprotokolls-Kombination, vorzugsweise umfassend ein korrespondierendes Anwendungsprotokoll (KIMA) und/oder ein korrespondierendes Datenübertragungsprotokoll (KMT), für die Datenübertragung (D) in Abhängigkeit vom Übertragungsmuster (M), das beim Überprüfen erkannt wurde.

Fig. 1

EP 4 120 594 A1

**Beschreibung**

Die Erfindung betrifft ein Verfahren zum Auswählen eines Kommunikationsprotokolls für eine Datenübertragung, insbesondere zwischen einem Fahrzeug und einer externen IT-Infrastruktur, um vorzugsweise die Datenübertragung mit einem optimierten Kommunikationsprotokoll durchzuführen, nach dem unabhängigen Verfahrensanspruch. Zudem betrifft die Erfindung eine entsprechende Steuereinheit nach dem unabhängigen Vorrichtungsanspruch. Ferner betrifft die Erfindung ein entsprechendes Fahrzeug nach dem nebengeordneten unabhängigen Vorrichtungsanspruch. Weiterhin betrifft die Erfindung ein entsprechendes Computerprogrammprodukt nach dem unabhängigen Produktanspruch.

Im Bereich der Kommunikationsprotokolle existiert nicht die eine bzw. einzige Lösung, die für alle Anwendungsumgebungen optimal ist. Vielmehr eignen sich verschiedene Kommunikationsprotokolle nur in einem speziellen Kontext der zu übertragenden Daten und/oder der bei einer Anwendung auftretenden Datenverläufe. Starr festgelegte Kommunikationsprotokolle eignen sich somit nicht optimal für alle Kontexte. Dazu kommt noch, dass verschiede Anwendungen unterschiedliche Daten und verschiedene Datenverläufe aufweisen, sodass starr festgelegte Kommunikationsprotokolle für viele Kontexte oft an Performance verlieren.

Der Erfindung liegt daher Aufgabe zugrunde, ein Verfahren zum Auswählen eines Kommunikationsprotokolls für eine Datenübertragung, insbesondere zwischen einem Fahrzeug und einer externen IT-Infrastruktur bereitzustellen, um vorzugsweise die Datenübertragung mit einem optimierten Kommunikationsprotokoll durchzuführen, um bevorzugt für die zu übertragenden Daten die in diesem Kontext optimale Kombination von Protokollen automatisch zu bestimmen und entsprechend zu verwenden. Zudem ist es Aufgabe der Erfindung, eine verbesserte Steuereinheit zur Verfügung zu stellen. Ferner ist es Aufgabe der Erfindung, ein verbessertes Fahrzeug bereitzustellen. Weiterhin ist es Aufgabe der Erfindung, ein entsprechendes Computerprogrammprodukt bereitzustellen.

Die erfindungsgemäße Aufgabe wird gelöst: durch ein Verfahren zum Auswählen eines Kommunikationsprotokolls für eine Datenübertragung, insbesondere zwischen einem Fahrzeug und einer externen IT-Infrastruktur, um vorzugsweise die Datenübertragung mit einem optimierten Kommunikationsprotokoll durchzuführen, nach dem unabhängigen Verfahrensanspruch. Zudem wird die erfindungsgemäße Aufgabe gelöst: durch eine entsprechende Steuereinheit nach dem unabhängigen Vorrichtungsanspruch. Ferner wird die erfindungsgemäße Aufgabe gelöst: durch ein entsprechendes Fahrzeug nach dem nebengeordneten unabhängigen Vorrichtungsanspruch. Weiterhin wird die erfindungsgemäße Aufgabe gelöst: durch ein entsprechendes Computerprogrammprodukt nach dem unabhängigen Produktanspruch. Dabei gelten Merkmale, die im Zusammenhang mit einzelnen Aspekten der Erfindung beschrieben sind, selbstverständlich auch im Zusammenhang mit den anderen Aspekten und jeweils umgekehrt, sodass bezüglich der Offenbarung zu den einzelnen Erfindungsaspekten stets wechselseitig Bezug genommen wird bzw. werden kann.

Die Erfindung stellt ein Verfahren zum Auswählen eines Kommunikationsprotokolls für eine Datenübertragung, insbesondere zwischen einem Fahrzeug und einer externen IT-Infrastruktur, oder zwischen einem mobilen Gerät im Allgemeinen, welches bspw. ein Teil eines verteilten und/oder eingebetteten Systems, sog "embedded system", sein kann, und einer externen IT-Infrastruktur, um vorzugsweise die Datenübertragung mit einem optimierten Kommunikationsprotokoll durchzuführen. Das Verfahren weist dabei folgende Schritte auf:

- Überprüfen, insbesondere Analysieren oder Analysieren lassen, der Datenübertragung in Bezug auf ein Übertragungsmuster, wobei insbesondere das Übertragungsmuster durch die Burstartigkeit der Datenübertragung abgebildet wird,
- Zuordnen mindestens eines korrespondierenden Kommunikationsprotokolls, insbesondere einer korrespondierenden Kommunikationsprotokolls-Kombination, vorzugsweise eines korrespondierenden Kommunikationsprotokolls-Paares, bevorzugt umfassend ein korrespondierendes Anwendungsprotokoll (sog. Application Layer Protocol) und/oder ein korrespondierendes Datenübertragungsprotokoll (sog. Transport Layer Protocol), für die Datenübertragung in Abhängigkeit vom Übertragungsmuster, das beim Überprüfen erkannt wurde.

Ein Fahrzeug im Rahmen der Erfindung kann bspw. ein Elektrofahrzeug sein, vorzugsweise ein hochautomatisiert fahrendes oder autonomes Elektrofahrzeug.

Eine IT-Infrastruktur im Rahmen der Erfindung kann bspw. durch eine Cloud realisiert werden, die vorzugsweise eine leistungsfähige Recheneinheit und bevorzugt eine trainierte KI aufweisen kann, die speziell dazu trainiert wurde, Datenübertragungen zu analysieren und anhand von der zu übertragenden Daten und/oder der auftretenden Datenverläufe, Übertragungsmuster zu erkennen. Anstelle der Cloud oder zusätzlich zu der Cloud kann auch ein Edge-Node oder ein verteiltes Edge-Node-System dienen.

Eine Datenübertragung im Rahmen der Erfindung kann bspw. einen Datenverkehr in Abhängigkeit von der Zeit bedeuten. Die Datenübertragung im Rahmen der Erfindung kann unterschiedliche zu übertragenden Daten und/oder unterschiedliche der auftretenden Datenverläufe aufweisen.

Ein Kommunikationsprotokoll bzw. ein Netzwerkprotokoll (oder einfach ausgedrückt Protokoll) im Rahmen der Erfindung kann bspw. eine Kommunikationsprotokolls-Kombination, vorzugsweise umfassend ein Anwendungsprotokoll bzw. ein Vehicle-X-Protokoll, insbesondere ein Vehicle-Server-Protokoll, wie z. B. MQTT oder ZMQ, und/oder ein Datenübertragungsprotokoll bzw. Verschlüsselungsprotokoll, wie z. B. TLS oder QUIC, aufweisen. Mit anderen Worten kann ein Kommunikationsprotokoll im Rahmen der Erfindung ein sog. Application Layer Protocol und ein sog. Transport Layer Protocol umfassen.

Der Erfindungsgedanke liegt dabei darin, dass für die zu übertragenden Daten die in dem jeweiligen Kontext bzw. Anwendungsfall optimale Kombination von Protokollen automatisch bestimmt wird. Die Erfindung erkennt zum einen, dass Protokolle nur für bestimmte Datenratenverläufe entwickelt wurden. Zudem erkennt die Erfindung, dass unterschiedliche Datenratenverläufe verschiedene Übertragungsmuster aufweisen können, z. B. von kontinuierlichen Datenübertragung (sog. Streaming) bis zur bursthaftigen Datenübertragung (sog. Burst). Gemäß der Erfindung werden für unterschiedliche Datenratenverläufe entsprechende Protokolle ausgewählt. Dies kann im Voraus und/oder dynamisch im laufenden Fahrbetrieb des Fahrzeuges erfolgen.

Eine Datenübertragung im Rahmen der Erfindung kann zumindest in Bezug auf die Burstartigkeit (als das Übertragungsmuster) analysiert werden, d. h. wie häufig Datenpakete gefolgt von Pausen im Vergleich zu einer gleichförmigen Datenrate verschickt werden. Die Burstartigkeit der Datenübertragung kann durch verschiedene Größen beeinflusst werden, unter anderem die zu übertragende Datenmenge, die Zwischenankunftszeit zwischen zu übermittelnden Daten und deren Regelmäßigkeit.

Die Burstartigkeit der Daten kann vorteilhafterweise in die Protokollauswahl einbezogen werden. Unterschiedliche Protokolle auf der Applikations- bzw. Transportebene zeigen unterschiedliches Leistungsvermögen hinsichtlich verschiedener Datenübertragungsparameter, wobei insbesondere eine Kombination von mehreren Datenübertragungsparametern als eine Burstartigkeit bezeichnet wird.

Protokolle auf Applikations- und Transportschicht lassen sich hinsichtlich verschiedener Leistungsparameter bewerten. Beispiele dafür sind der Durchsatz bzw. die Kanaldatenrate, Latenz oder der Einsatz von Rechnerressourcen. In Abhängigkeit von der Burstartigkeit der Daten unterscheidet sich das Leistungsvermögen der Protokolle hinsichtlich der Leistungsparameter. Während bei einer hohen Burstartigkeit das explizite Aufbauen und Trennen der Verbindung für jede Übertragung vorteilhaft sein kann, wird bei einer geringen Burstartigkeit dauerhaft eine Verbindung erhalten. Dieses Verhalten hat somit unmittelbaren Einfluss auf die Auswahl der Protokolle, die ein unterschiedliches Leistungsvermögen z. B. beim Verbindungsaufbau aufweisen. Im Vorfeld kann vorteilhafterweise ein Mapping von unterschiedlichen Burstartigkeitsgraden auf unterschiedliche Protokolle durchgeführt werden.

Zur Bestimmung der Burstartigkeit der Daten können die zu übertragenden Daten mittels eines Datenübertragungsanalysators bewertet werden. Mithilfe des Datenübertragungsanalysators kann folglich eine optimierte Wahl der Protokolle in der Applikations- und Transportschicht erfolgen.

Die Datenübertragungen können "online" durch den Datenübertragungsanalysator klassifiziert werden. Eine "Offline"-Klassifikation der zu erwartenden Datenübertragung kann mittels des Datenübertragungsanalysators zudem im Vorfeld ermöglicht werden, um eine Protokollvorauswahl für die Datenübertragung einzustellen.

Der Datenübertragungsanalysator kann das Datenaufkommen über einen bestimmten Zeitraum auswerten und die Daten anschließend in Bezug auf ihre Burstartigkeit bewerten. Die Burstartigkeit der Daten spiegelt somit auch das Kommunikationsverhalten zwischen Sender und Empfänger wider.

Vorteilhafterweise kann eine dynamische Anpassung der Protokolle an die Burstartigkeit der Daten realisiert werden. Ändert sich die Burstartigkeit der Daten, so kann sich eine günstigere Protokoll-Kombination ergeben. Bestimmte Dienste können ein vorhersehbares Kommunikationsverhalten aufweisen, sodass eine bestimmte Datenmenge in einen regelmäßigen Abstand übertragen wird. Eine "Offline"-Bewertung von Diensten mit bekanntem Datenaufkommen hinsichtlich ihrer Burstartigkeit ermöglicht eine Protokollauswahl im Vorfeld. Somit kann die Datenübertragung mit einer Protokoll-Kombination begonnen werden, die die höchste Leistungsfähigkeit erwarten lässt. Weicht das Übertragungsverhalten von der Erwartung ab, kann die Protokollwahl dynamisch angepasst werden.

Mithilfe der Erfindung können mehrere Vorteile bereitgestellt werden:

- Berücksichtigung der Burstartigkeit von Datenübertragungen bei der Protokollauswahl.
- Auswahl einer günstigen und/oder optimierten Kombination aus Protokollen, vorzugsweise auf der Applikations- und Transportschicht.
- Identifikation des Einflusses der Burstartigkeit auf das Leistungsvermögen der Protokolle.
- Datenübertragungsanalysator zur "Online"-Bewertung der Burstartigkeit.
- Dynamisches Umschalten der Protokolle bei Änderung der Burstartigkeit.
- Bewertung von Diensten hinsichtlich der Burstartigkeit ihres Datenaufkommens zur "Offline"-Klassifikation.

Mithilfe der Erfindung kann die Datenübertragung bei der Kommunikation zwischen dem Fahrzeug und der externen IT-Infrastruktur auf eine verbesserte Weise mit einer erhöhten Leistungsfähigkeit und/oder Effizienz erfolgen. Die Dienste im Fahrzeug, die eine Kommunikation mit der externen IT-Infrastruktur vorsehen, können somit optimal bereitgestellt werden. Der Kundenkomfort kann dadurch erheblich gesteigert werden.

Ferner kann vorgesehen sein, dass das Verfahren bei einem fahrenden Fahrzeug durchgeführt wird. Auf diese Weise kann eine dynamische Anpassung der Protokolle bei veränderlichen Datenübertragungen im laufenden Betrieb des Fahrzeuges ermöglicht werden. Dies kann beim Bereitstellen von Diensten während der Fahrt vorteilhaft sein, um eine verbesserte Nutzung des Fahrzeuges zu ermöglichen.

Weiterhin kann vorgesehen sein, dass das Verfahren in einem Onlinemodus einer Kommunikationseinheit des Fahrzeuges, insbesondere bei einer aktivierten Kommunikationseinheit des Fahrzeuges, durchgeführt wird. Auf diese Weise können die Online-Dienste im Fahrzeug auf eine verbesserte Weise bereitgestellt werden.

Ferner kann vorgesehen sein, dass beim Überprüfen der Datenübertragung in Bezug auf ein Übertragungsmuster mindestens einer der aufgelisteten Schritte durchgeführt wird:

- Aufbau einer Kommunikationsverbindung mit einem voreingestellten Kommunikationsprotokoll,
- Durchführen der Datenübertragung mithilfe des voreingestellten Kommunikationsprotokolls, und/oder
- Analysieren der Datenübertragung in Bezug auf ein Übertragungsmuster.

Auf diese Weise können die Datenübertragungen im laufenden Betrieb des Fahrzeuges durchgeführt und ausgewertet werden, um optimierte Kommunikationsprotokolle zu bestimmen und anzuwenden.

Zudem kann vorgesehen sein, dass das Verfahren zumindest zum Teil durch einen Datenübertragungsanalysator durchgeführt wird, der in dem Fahrzeug, insbesondere in einer, vorzugsweise zentralen, Steuereinheit des Fahrzeuges, installiert ist. Der Datenübertragungsanalysator kann mithilfe von Hardware und/oder Software-Bausteinen realisiert werden. Wenn der Datenübertragungsanalysator direkt in dem Fahrzeug installiert ist, kann das Fahrzeug autonom bestimmen, welche Kommunikationsprotokolle optimal für die zu erwartenden und/oder aktuelle Datenübertragung sind.

Außerdem kann vorgesehen sein, dass das Verfahren zumindest zum Teil durch einen Datenübertragungsanalysator durchgeführt wird, der auf der externen IT-Infrastruktur installiert ist. Auf diese Weise kann die Rechenleistung zum Analysieren der Datenübertragung an die externe IT-Infrastruktur ausgelagert werden. Nach der Analyse der Datenübertragung und vorzugsweise nach dem Zuordnen eines korrespondierenden Kommunikationsprotokolls, insbesondere einer korrespondierenden Kommunikationsprotokolls-Kombination, vorzugsweise umfassend ein korrespondierendes Anwendungsprotokoll und/oder ein korrespondierendes Datenübertragungsprotokoll, kann die externe IT-Infrastruktur ein zugeordnetes Kommunikationsprotokoll an das Fahrzeug übermitteln.

Ferner kann vorgesehen sein, dass das Verfahren bei einem stehenden Fahrzeug, vorzugsweise in Vorbereitung auf einen Fahrbetrieb des Fahrzeuges, durchgeführt wird. Somit kann eine Voreinstellung eines korrespondierenden Kommunikationsprotokolls, insbesondere einer korrespondierenden Kommunikationsprotokolls-Kombination, vorzugsweise umfassend ein korrespondierendes Anwendungsprotokoll und/oder ein korrespondierendes Datenübertragungsprotokoll, getroffen werden. Wenn die zu erwartende Datenübertagung sich nicht oder nicht wesentlich ändert, kann das voreingestellt Kommunikationsprotokoll im laufenden Betrieb des Fahrzeuges beibehalten werden. Auf diese Weise kann die Einstellung der Protokolle bei prognostizierbaren Datenübertragungen auf eine vorteilhafte Weise ermöglicht werden. Dies kann für die Nutzer vorteilhaft sein, die gewohnte Muster beim Nutzen des Fahrzeuges zeigen.

Weiterhin kann vorgesehen sein, dass das Verfahren in einem Offlinemodus einer Kommunikationseinheit des Fahrzeuges, insbesondere bei einer deaktivierten Kommunikationseinheit des Fahrzeuges, durchgeführt wird. Auf diese Weise können die Online-Dienste im Fahrzeug im Voraus und/oder "offline" vorbereitet werden.

Des Weiteren kann vorgesehen sein, dass beim Überprüfen der Datenübertragung das Übertragungsmuster, insbesondere mithilfe eines Datenübertragungsanalysators, geschätzt und/oder vorausgesagt wird. Dabei können historische Daten und/oder Erfahrungswerte auf eine vorteilhafte Weise berücksichtigt werden.

Das Verfahren kann zudem mindestens einen weiteren Schritt aufweisen:

- Aufbau einer Kommunikationsverbindung mit dem korrespondierenden Kommunikationsprotokoll, der für die Datenübertragung in Abhängigkeit vom erkannten Übertragungsmuster zugeordnet wurde,
- Durchführen der Datenübertragung mithilfe des mindestens einen korrespondierenden Kommunikationsprotokolls und/oder
- Speichern des mindestens einen korrespondierenden Kommunikationsprotokolls als eine Voreinstellung.

Auf diese Weise kann ermöglicht werden, dass das korrespondierende Kommunikationsprotokoll auf eine verbesserte Weise verwendet wird, sodass die Datenübertragung mit dem optimierten Kommunikationsprotokoll durchgeführt wird.

Vorteilhafterweise kann vorgesehen sein, dass ein dynamisches Umschalten eines aktuellen Kommunikationsprotokolls auf das korrespondierende Kommunikationsprotokoll durchgeführt wird, wenn beim Überprüfen erkannt wurde, dass sich das Übertragungsmuster geändert hat. Auf diese Weise kann das Verfahren ermöglichen, dass sogar für veränderliche Datenübertragungen, bspw. bei wechselnden Diensten im Fahrzeug, passende Kommunikationsprotokolle dynamisch eingeschaltet werden.

Außerdem kann vorgesehen sein, dass das Verfahren kontinuierlich, wiederholend und/oder regelmäßig durchgeführt wird. Somit kann ein flexibles Ansprechen auf veränderliche Datenübertragungen, bspw. bei wechselnden Diensten im Fahrzeug, ermöglicht werden, um auf passende Kommunikationsprotokolle dynamisch umschalten zu können.

Die Verfahrensschritte können nacheinander, zumindest teilweise gleichzeitig und/oder simultan durchgeführt werden.

Ferner kann das Verfahren mindestens einen weiteren Schritt aufweisen:

- Bewerten von Diensten im Fahrzeug in Bezug auf die Übertragungsmuster,
- Zuordnen korrespondierender Kommunikationsprotokolle für die Dienste im Fahrzeug in Abhängigkeit von den Übertragungsmustern,
- Kategorisieren von Diensten im Fahrzeug in Bezug auf geeignete Kommunikationsprotokolle, und/oder
- Nutzen von Kategorien von Diensten im Fahrzeug für Voreinstellungen und/oder Standardeinstellungen.

Auf diese Weise kann das Verfahren eine erweiterte Funktionalität bereitstellen.

Zudem kann das Verfahren zur Beurteilung von Kommunikationsprotokollen benutzt werden, wobei das Verfahren mindestens einen weiteren Schritt aufweisen kann:

- Bestimmen eines Einflusses der Übertragungsmuster auf das Leistungsvermögen der Kommunikationsprotokolle.

Somit kann das Verfahren eine vorteilhafte Funktionalität bereitstellen.

Weiterhin ist es denkbar, dass das Übertragungsmuster durch unterschiedliche Datenübertragungsparameter bei der Datenübertragung abgebildet werden kann, wobei insbesondere die Datenübertragungsparameter die Datenübertragung in Abhängigkeit von der Zeit abbilden. Auf diese Weise kann die Datenübertragung präzise analysiert werden.

Des Weiteren ist es denkbar, dass die unterschiedlichen Datenübertragungsparameter bei der Datenübertragung mindestens einen von den folgenden Parametern und/oder eine Kombination von den folgenden Parametern aufweisen:

- Häufigkeit der Datenpakete,
- Größe der Datenpakete, und/oder
- zeitlicher Abstand zwischen den Datenpaketen.

Auf diese Weise kann die Burstartigkeit der Datenübertragung bestimmt werden, die zwischen "0" bzw. "Streaming" und "1" bzw. "Burst" bewertet werden kann.

Die Burstartigkeit der Datenübertragung kann bezeichnend dafür sein, welche Leistungsparameter der Protokolle eine wesentliche Rolle für eine effiziente Datenübertragung spielen. Das Protokoll bzw. das Protokoll-Paar kann dabei ausgewählt werden, die die erforderlichen Leistungsparameter am besten trifft.

Zudem ist es denkbar, dass beim Zuordnen eines korrespondierenden Kommunikationsprotokolls für die Datenübertragung unterschiedliche Leistungsparameter verschiedener Kommunikationsprotokolle berücksichtigt werden. Auf diese Weise können die Protokolle auf eine verbesserte Weise ausgesucht werden, die für die erkannten Übertragungsmuster vorteilhaft sein können.

Außerdem ist es denkbar, dass die unterschiedlichen Leistungsparameter verschiedener Kommunikationsprotokolle mindestens einen folgenden Parameter aufweisen:

- Latenz,
- Rechenleistung,
- Durchsatz,
- Kanaldatenrate, und/oder
- erweiterte IoT-Funktionen.

Auf diese Weise können die Erfordernisse der Datenübertragung mit verschiedenen Datenübertragungsparametern auf eine vorteilhafte Weise auf unterschiedlicher Leistungsparameter verschiedener Kommunikationsprotokolle abgebildet werden.

Vorteilhafterweise können die unterschiedlichen Leistungsparameter verschiedener Kommunikationsprotokolle in gewichteter Form berücksichtigt werden, und/oder dass die unterschiedlichen Leistungsparameter mit Gewichtungsfaktoren versehen werden. Die Auswahl der besten Protokoll-Kombination aus Transport- und Applikationsprotokoll hängt zusätzlich von der vorzugebenen Gewichtung von Performanceparametern wie Latenz, verfügbarer Rechenleistung oder Kanaldatenrate ab. Basierend auf einer vorgegebenen Gewichtung der Performanceparameter kann die Wahl der optimalen Protokoll-Kombination als ein Optimierungsproblem betrachtet werden, um ein optimales Protokoll bzw. eine optionale Protokoll-Kombination, insbesondere ein optimales Protokoll-Paar, zu finden.

Ferner stellt die Erfindung eine Steuereinheit, bspw. für ein Fahrzeug oder für ein mobiles Gerät im Allgemeinen, welches bspw. ein Teil eines verteilten und/oder eingebetteten Systems, sog "embedded system", sein kann, bereit, aufweisend:
eine Kommunikationseinheit zum Aufbauen und/oder Durchführen einer Datenübertragung, insbesondere zwischen einem Fahrzeug oder dem mobilen Gerät und einer externen IT-Infrastruktur, und einen Datenübertragungsanalysator zum Durchführen eines Verfahrens, welches wie oben beschrieben ablaufen kann. Mithilfe der erfindungsgemäßen Steuereinheit können die gleichen Vorteile erreicht werden, die oben im Zusammenhang mit dem erfindungsgemäßen Verfahren beschrieben wurden. Auf diese Vorteile wird vorliegend vollumfänglich Bezug genommen.

Weiterhin stellt die Erfindung ein Fahrzeug mit einer Steuereinheit bereit, die wie oben beschrieben ausgebildet sein kann. Mithilfe des erfindungsgemäßen Fahrzeuges können die gleichen Vorteile erreicht werden, die oben im Zusammenhang mit dem erfindungsgemäßen Verfahren beschrieben wurden. Auf diese Vorteile wird vorliegend vollumfänglich Bezug genommen.

Des Weiteren stellt die Erfindung ein Computerprogrammprodukt bereit, umfassend Befehle, die bei der Ausführung des Computerprogrammprodukts durch einen Computer diesen veranlassen, das Verfahren durchzuführen, welches wie oben beschrieben ablaufen kann. Mithilfe des erfindungsgemäßen Computerprogrammproduktes können die gleichen Vorteile erreicht werden, die oben im Zusammenhang mit dem erfindungsgemäßen Verfahren beschrieben wurden. Auf diese Vorteile wird vorliegend vollumfänglich Bezug genommen. Weiterhin wird die Erfindung anhand der Figuren näher dargestellt. Dabei ist zu beachten, dass die Figuren nur einen beschreibenden Charakter haben und nicht dazu gedacht sind, die Erfindung in irgendeiner Form einzuschränken.

Es zeigen:

Fig. 1     eine beispielhafte Darstellung eines Ablaufes eines Verfahrens im Sinne der Erfindung,

Fig. 2     ein beispielhaftes Datenaufkommen über die Zeit mit einer hohen Burstartigkeit "Burst" (links) und einer geringen Burstartigkeit "Streaming" (rechts),

Fig. 3     eine beispielhafte Online-Analyse mit einem Datenübertragungsanalysator im Fahrzeug als Sender,

Fig. 4     eine beispielhafte Online-Analyse mit einem Datenübertragungsanalysator in der externen IT-Infrastruktur als Empfänger,

Fig. 5     einen beispielhaften Entscheidungsbaum beim Zuordnen von Kommunikationsprotokollen in Abhängigkeit von unterschiedlichen Übertragungsmustern, und

Fig. 6     eine beispielhafte Offline-Klassifikation von Diensten mit Datenübertragung im Vorfeld.

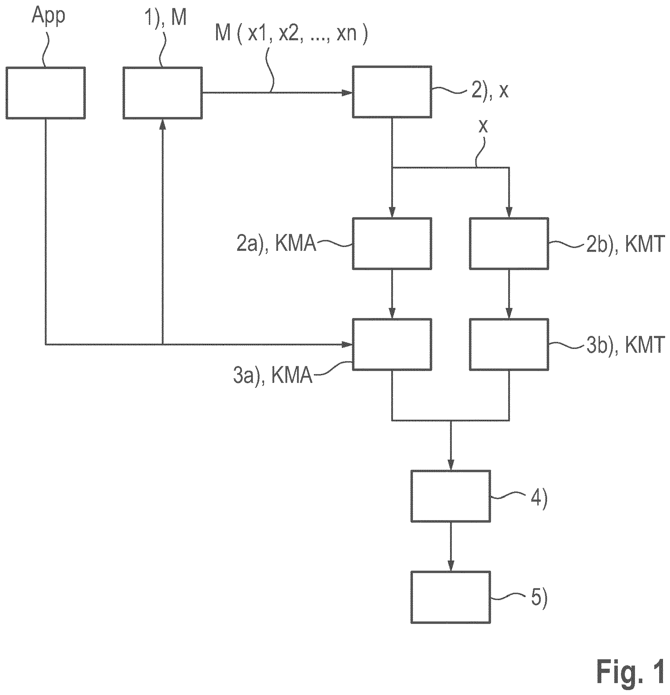

Die Figuren 1 bis 6 dienen zur Veranschaulichung eines erfindungsgemäßen Verfahrens. Die Erfindung stellt ein Verfahren zum Auswählen eines Kommunikationsprotokolls für eine Datenübertragung D, insbesondere zwischen einem Fahrzeug 100 und einer externen IT-Infrastruktur 200, wie z. B. Cloud, um vorzugsweise die Datenübertragung D mit einem optimierten Kommunikationsprotokoll KM durchzuführen. Das Verfahren kann zudem zum Auswählen eines Kommunikationsprotokolls für eine Datenübertragung D zwischen einem mobilen Gerät im Allgemeinen, welches bspw. ein Teil eines verteilten und/oder eingebetteten Systems, sog "embedded system", sein kann, und einer externen IT-Infrastruktur dienen.

Das Verfahren weist folgende Schritte auf:

- Überprüfen, d. h. Auswerten bzw. Analysieren oder Analysieren lassen, der Datenübertragung D in Bezug auf ein Übertragungsmuster M; und
- Zuordnen mindestens eines korrespondierenden Kommunikationsprotokolls KM, insbesondere einer korrespondierenden Kommunikationsprotokolls-Kombination, vorzugsweise umfassend ein korrespondierendes Anwendungsprotokoll KMA und/oder ein korrespondierendes Datenübertragungsprotokoll KMT, für die Datenübertragung D in Abhängigkeit vom Übertragungsmuster, das beim Überprüfen erkannt wurde.

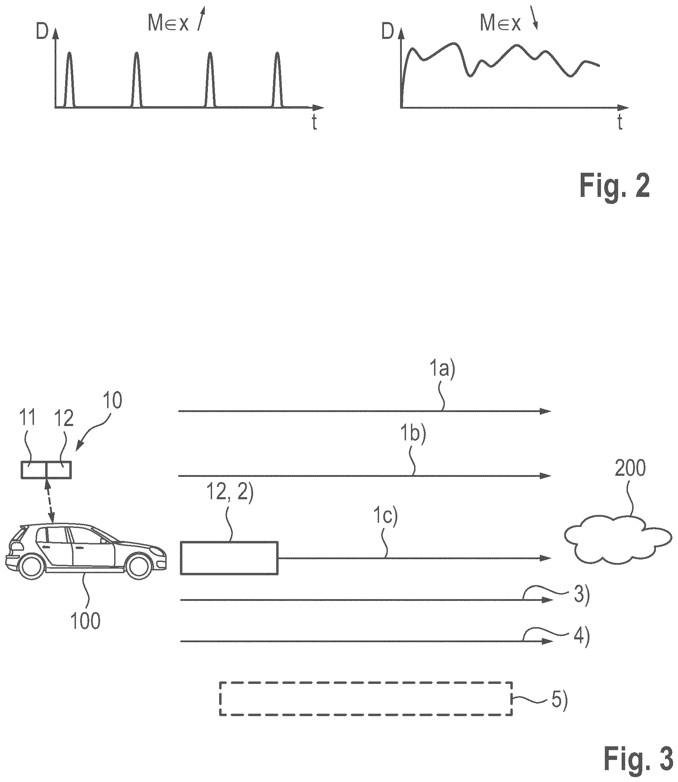

Zwei Beispiele einer möglichen Datenübertragung D sind in der Figur 2 dargestellt. Links in der Figur 2 ist eine Datenübertragung D mit einer hohen Burstartigkeit x gezeigt. Rechts in der Figur 2 ist eine Datenübertragung D mit einer niedrigen Burstartigkeit x gezeigt, die bspw. beim Streaming vorkommt.

Ein beispielhaftes Fahrzeug 100 ist schematisch in den Figuren 3, 4 und 6 dargestellt.

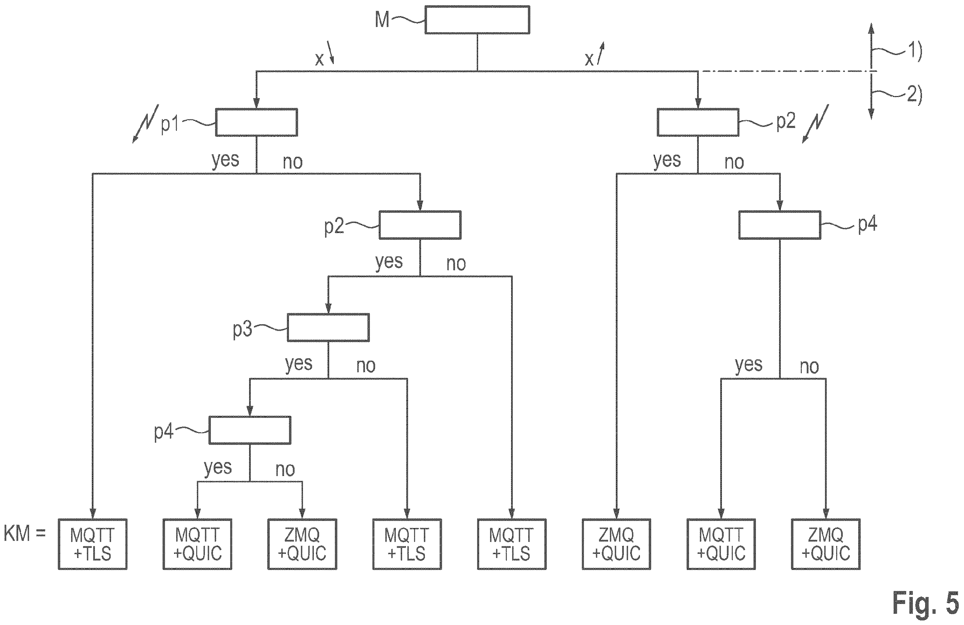

Ein Entscheidungsbaum beim Zuordnen von Kommunikationsprotokollen ist schematisch in der Figur 5 dargestellt.

Wie es anhand der Figuren 2 und 5 zu erkennen ist, wird im Rahmen der Erfindung für die jeweiligen Datenübertragungen D jeweils optimale Kombination von Protokollen KM automatisch bestimmt. Wie es die Figur 2 verdeutlicht, können unterschiedliche Datenratenverläufe verschiedene Übertragungsmuster M aufweisen, z. B. von kontinuierlichen Datenübertragung (Streaming, rechts in der Figur 2) bis zur stark bursthaftigen Datenübertragung (Burst, links in der Figur 2). Wie es die Figur 5 zeigt, werden für unterschiedliche Datenratenverläufe entsprechende Kommunikationsprotokolle KM ausgewählt.

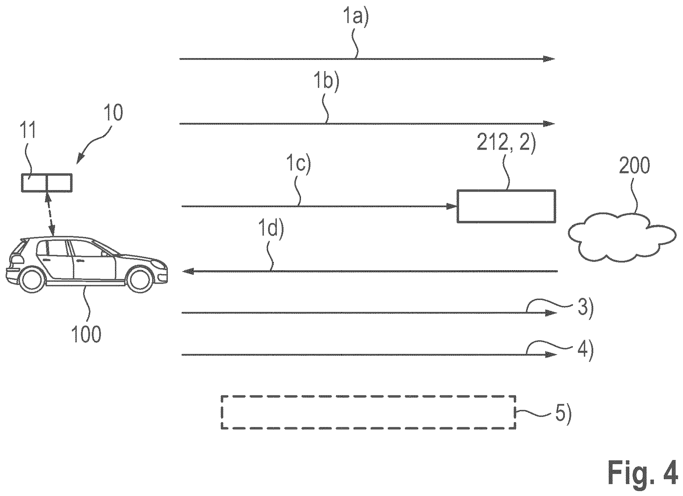

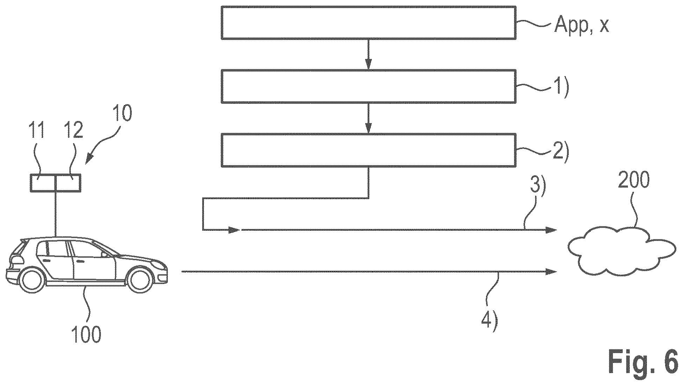

Wie es die Figuren 3 und 4 zeigen, können die Kommunikationsprotokolle KM im laufenden Fahrbetrieb des Fahrzeuges 100 bestimmt und dynamisch angepasst werden. Wie es die Figur 6 wiederum zeigt, können die Kommunikationsprotokolle KM im Voraus bestimmt und eingestellt werden.

Wie es die Figur 2 verdeutlicht, kann eine Datenübertragung D in Bezug auf ihre Burstartigkeit x analysiert werden, d. h. wie häufig Datenpakete gefolgt von Pausen im Vergleich zu einer gleichförmigen Datenrate verschickt werden. Die Burstartigkeit x der Datenübertragung D kann durch verschiedene Datenübertragungsparameter x1, x2, ..., xn abgebildet werden, unter anderem die zu übertragende Datenmenge, die Zwischenankunftszeit zwischen zu übermittelnden Daten und deren Regelmäßigkeit. Wie es die Figur 5 verdeutlicht, kann die Burstartigkeit x der Datenübertragung D vorteilhfterweise in die Protokollauswahl einbezogen werden.

Da unterschiedliche Kommunikationsprotokolle KM auf der Applikations- bzw. Transportebene unterschiedliches Leistungsvermögen hinsichtlich verschiedener Datenübertragungsparameter x1, x2, ..., xn zeigen, sind in der Figur 1 das Zuordnen eines Anwendungsprotokolls KMA unter einem Teilschritt 2a) und das Zuordnen eines Datenübertragungsprotokolls KMT unter einem Teilschritt 2b) gezeigt. Auch das Anwenden der Protokolle KMA, KMT wurde in der Figur 1 in die Teilschritte 3a) und 3b) unterteilt, bevor die Datenübertragung D in Schritt 4) mit einem optimierten Protokoll-Paar KMA, KMT durchgeführt wird. In Schritt 5) kann optional ein Speichern des optimierten Protokoll-Paares KMA, KMT als eine Voreinstellung vorgesehen sein.

Unterschiedliche Protokolle in der Applikations- und Transportschicht lassen sich hinsichtlich verschiedener Leistungsparameter p1, p2, ..., pn bewerten, wie es die Figur 5 schematisch andeutet. Beispiele dafür sind Einsatz von Rechnerressourcen p1, Latenz p2, Durchsatz und/oder Kanaldatenrate p3, erweiterte IoT-Funktionen p4 usw. In Abhängigkeit von der Burstartigkeit x der Datenübertragung D unterscheidet sich das Leistungsvermögen der Protokolle KM hinsichtlich der erforderlichen Leistungsparameter p1, p2, ..., pn.

Bei einer hohen Burstartigkeit x (links in der Figur 2) kann bspw. ein schnelles Aufbauen und Trennen der Verbindung für jedes Datenpaket vorteilhaft sein. Hierzu kann eine niedrige Latenz p2 vorteilhaft sein, wie dies rechts in der Figur 5 angedeutet ist.

Bei einer geringen Burstartigkeit (rechts in der Figur 2) kann eine Verbindung dagegen dauerhaft erhalten bleiben. Dabei kann vielmehr der Einsatz von Rechnerressourcen p1 wichtig sein, wie dies links in der Figur 5 angedeutet ist.

Das Übertragungsmuster M bei der Datenübertragung D kann vorteilhafterweise unmittelbar bei der Auswahl der Protokolle KM berücksichtigt werden, wie dies die Figur 5 schematisch darstellt.

Im Vorfeld kann bspw. ein Mapping von unterschiedlichen Burstartigkeitsgraden auf unterschiedliche Kommunikationsprotokolle KM durchgeführt werden.

Zur Bestimmung der Burstartigkeit x der Datenübertragung D können die zu übertragenden Daten mittels eines Datenübertragungsanalysators 12, 212 bewertet werden. Auf Grundlage des Datenübertragungsanalysators 12, 212 kann folglich eine optimierte Auswahl der Kommunikationsprotokolle KM in der Applikationsschicht (Teilschritt 3a in der Figur 1) und in der Transportschicht (Teilschritt 3b in der Figur 1) getroffen werden.

Wie es die Figuren 3 und 4 verdeutlichen, können die Datenübertragungen D "online" analysiert werden. Wie es die Figur 6 andeutet, kann eine "Offline"-Klassifikation der zu erwartenden Datenübertragung D im Vorfeld ermöglicht werden, um eine Protokollauswahl oder zumindest eine Protokollvorauswahl für die Datenübertragung D einzustellen.

Wie mithilfe der Figur 2 zu erkennen ist, kann der Datenübertragungsanalysator 12, 212 das Datenaufkommen über einen bestimmten Zeitraum auswerten und die Daten anschließend in Bezug auf ihre Burstartigkeit x bewerten.

Wie es die Figuren 3 und 4 zeigen, kann eine dynamische Anpassung der Protokolle KM an die Burstartigkeit x der Datenübertragung D realisiert werden. Ändert sich die Burstartigkeit x der Datenübertragung D, kann eine günstigere Protokoll-Kombination ausgewählt werden.

Wenn bestimmte Dienste APP eine vorhersehbare Burstartigkeit x aufweisen, kann eine "Offline"-Bewertung von Diensten APP im Sinne der Figur 6 durchgeführt werden (vgl. Schritt 1 in der Figur 6). Ferner kann eine "Offline"-Protokollauswahl im Vorfeld getroffen werden (vgl. Schritt 2 in der Figur 6). Somit kann die Datenübertragung mit einer Protokoll-Kombination durchgeführt oder zumindest begonnen werden, die die höchste Leistungsfähigkeit und/oder Effizienz erwarten lässt.

Weicht das Übertragungsverhalten von der Erwartung ab, kann die Protokollwahl gemäß den Figuren 3 und 4 dynamisch angepasst werden.

Wie es die Figuren 3 und 4 zudem zeigen, können die zu übertragenden Daten sender- und/oder empfängerseitig ausgewertet werden. Die Erfindung kann in jedem System zu Einsatz kommen, um das Leistungsvermögen der Kommunikationsprotokolle KM auszuschöpfen. Insbesondere ressourcenbeschränkte Systeme, wie beispielsweise eingebettete Systeme, sind auf eine hohe Effizienz angewiesen. Durch eine optimierte Protokollauswahl können Ressourcen gespart oder mit demselben Ressourceneinsatz eine höhere Leistung erreicht werden.

Ein Anwendungsbeispiel einer Online-Analyse der Datenübertragung D vom Fahrzeug 100 an die Cloud 20 ist in der Figur 3 dargestellt. Dabei befindet sich der Datenübertragungsanalysator 12 im Fahrzeug 100 (Sender). Wenn bspw. im Vorfeld kein Wissen über die Dienste App und deren Übertragungsmuster M vorhanden ist, kann die Kommunikationsverbindung in Schritt 1a) mit einer im voreingestellten Protokoll-Kombination aufgebaut werden. In Schritt 1b) kann die Datenübertragung D für einen gewissen Zeitraum durchgeführt werden und in Schritt 1c) kann die Datenübertragung D analysiert werden. Wird eine verbesserte Protokoll-Kombination hinsichtlich der zu berücksichtigen Leistungsparameter erkannt, kann diese in Schritt 3) eingestellt und in Schritt 4) für die Datenübertragung D verwendet werden. Wird eine für das Fahrzeug 100 verbesserte Protokoll-Kombination erkannt, kann diese optional in Schritt 5) für zukünftige Übertragungen als neue Voreistellung gespeichert werden.

Mit anderen Worten kann das Verfahren mindestens einen weiteren Schritt aufweisen:

- Aufbau einer Kommunikationsverbindung mit dem korrespondierenden Kommunikationsprotokoll KM, der für die Datenübertragung in Abhängigkeit vom erkannten Übertragungsmuster M zugeordnet wurde,

- Durchführen der Datenübertragung D mithilfe des mindestens einen korrespondierenden Kommunikationsprotokolls KM, und/oder
- Speichern des mindestens einen korrespondierenden Kommunikationsprotokolls als eine Voreinstellung

Ebenso denkbar ist eine Variante, die in der Figur 4 gezeigt ist, bei der sich der Datenübertragungsanalysator 12 in der externen IT-Infrastruktur (Empfänger) befindet. Die eingehenden Daten in Schritt 1) werden dabei ebenfalls hinsichtlich der Burstartigkeit in Schritt 2) bewertet und somit auf das Übertragungsmuster M zurückgeschlossen. Die IT-Infrastruktur, bspw. in Form von Cloud, hat im Gegensatz zum Fahrzeug 100 nahezu unbeschränkte Rechenressourcen zur Verfügung. Diese Variante bietet daher den grundsätzlichen Vorteil, dass der Datenübertragungsanalysator 12 ressourcensparend für das Fahrzeug 100 ausgeführt werden kann. Nach dem Zuordnen kann die externe IT-Infrastruktur 200 ein zugeordnetes Kommunikationsprotokoll KM an das Fahrzeug 100 übermitteln.

Vorteilhafterweise kann das Verfahren für folgende Funktionen benutzt werden:

- Bewerten von Diensten APP im Fahrzeug 100 in Bezug auf die Übertragungsmuster M,
- Zuordnen korrespondierender Kommunikationsprotokolle KM für die Dienste APP im Fahrzeug 100 in Abhängigkeit von den Übertragungsmustern M,
- Kategorisieren von Diensten APP im Fahrzeug 100 in Bezug auf geeignete Kommunikationsprotokolle KM,
- Nutzen von Kategorien von Diensten APP im Fahrzeug 100 für Voreinstellungen und/oder Standardeinstellungen.

Zudem kann das Verfahren zur Beurteilung von Protokollen KM benutzt werden, wobei das Verfahren mindestens einen weiteren Schritt aufweisen kann:

- Bestimmen eines Einflusses der Übertragungsmuster M auf das Leistungsvermögen der Kommunikationsprotokolle KM.

Die Auswahl der besten Protokollkombination aus Transport- und Applikationsprotokoll hängt zusätzlich von der vorzugebenen Gewichtung von Leistungsparametern p1, p2, ..., pn, wie z. B. Latenz p2, verfügbarer Rechenleistung p1 oder Kanaldatenrate p3 ab. Basierend auf einer Gewichtung der Leistungsparametern p1, p2, ..., pn, mit Gewichtungsfaktoren w1, w2, ..., wn kann eine Kostenfunktion $f$ erstellt werden, die von der Burstartigkeit x der Datenübertragung abhängt f(x):

$$c_{opt} = \arg\min_{\forall c} f(x).$$

Da die konkreten Werte der Kostenfunktion $f$ in komplexer Weise von der Software- und Hardwareumgebung der Kommunikationspartner sowie dem Mobilfunknetz abhängen, ist es einfacher, die Wahl der optimalen Protokollkombination als ein Optimierungsproblem zu betrachten, um das Minimum der Kostenfunktion $f$ zu finden. Qualitativ kann eine solche Auswahl in einem Entscheidungsbaum dargestellt werden, wie es beispielhaft die Figur 5 illustriert. Die Figur 5 zeigt beispielhaft Kommunikationsprotokolle, wie MQTT, ZMQ, TLS, QUIC.

Die Erfindung kann vorteilhafterweise für sämtliche Kommunikationsprotokolle KM in Netzwerken und auf jeder denkbaren Plattform verwendet werden. Mögliche Varianten beschreiben dabei insbesondere

- das dynamische Umschalten zwischen zwei Protokollkombinationen,
- die intelligente Protokollauswahl bei mehreren Übertragungspfaden ("Multi-path") sowie
- die "Offline"-Klassifikation von Diensten APP.

In Systemen mit einem hohen Optimierungsbedarf kann mithilfe der Erfindung das Leistungsvermögen erheblich erhöht werden. Das Leistungsvermögen der Kommunikationsprotokolle KM kann besser ausgeschöpft werden. Die Kommunikationsprotokolle KM werden für die Anwendungsfälle verwendet, in denen ihre Stärken umgesetzt werden können. Zudem bietet das dynamische Umschalten bei Veränderung der Burstartigkeit die Möglichkeit, auf Veränderungen des Datenaufkommens zu reagieren.

Ein entsprechendes Fahrzeug 100 sowie eine entsprechende Steuereinheit 10, in der ein Datenübertragungsanalysator 12 integriert ist, stellen jeweils einen weiteren Aspekt der Erfindung dar.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

Bezugszeichenliste

| | |
|---|---|
| 100 | Fahrzeug |
| 10 | Steuereinheit |
| 11 | Kommunikationseinheit |
| 12 | Datenübertragungsanalysator |
| 200 | IT-Infrastruktur |
| 212 | Datenübertragungsanalysator |
| D | Datenübertragung |

M      Übertragungsmuster

APP    Dienste
KM     Kommunikationsprotokoll
KMA    Anwendungsprotokoll
KMT    Datenübertragungsprotokoll

x      Burstartigkeit

p1     Leistungsparameter
p2     Leistungsparameter
p3     Leistungsparameter
p4     Leistungsparameter
pn     Leistungsparameter

w1     Gewichtungsfaktor
w2     Gewichtungsfaktor
wn     Gewichtungsfaktor

**Patentansprüche**

1.  Verfahren zum Auswählen eines Kommunikationsprotokolls (KM) für eine Datenübertragung, insbesondere zwischen einem Fahrzeug (100) und einer externen IT-Infrastruktur (200), aufweisend:

    - Überprüfen der Datenübertragung (D) in Bezug auf ein Übertragungsmuster (M); und
    - Zuordnen mindestens eines korrespondierenden Kommunikationsprotokolls (KM) für die Datenübertragung (D) in Abhängigkeit vom Übertragungsmuster (M), das beim Überprüfen erkannt wurde.

2.  Verfahren nach Anspruch 1, wobei

    das Verfahren bei einem fahrenden Fahrzeug (100) durchgeführt wird,
    und/oder dass das Verfahren in einem Onlinemodus einer Kommunikationseinheit (11) des Fahrzeuges (100), insbesondere bei einer aktivierten Kommunikationseinheit (11) des Fahrzeuges (100), durchgeführt wird,
    und/oder dass beim Überprüfen der Datenübertragung (D) in Bezug auf ein Übertragungsmuster (M) mindestens ein folgernder Schritt durchgeführt wird:

        - Aufbau einer Kommunikationsverbindung mit einem voreingestellten Kommunikationsprotokoll (KM),
        - Durchführen der Datenübertragung (D) mithilfe des voreingestellten Kommunikationsprotokolls (KM), und/oder
        - Analysieren der Datenübertragung (D) in Bezug auf ein Übertragungsmuster (M).

3.  Verfahren nach Anspruch 1 oder 2, wobei

    das Verfahren zumindest zum Teil durch einen Datenübertragungsanalysator (12) durchgeführt wird, der in dem Fahrzeug (100), insbesondere in einer, vorzugsweise zentralen, Steuereinheit (10) des Fahrzeuges (100), installiert ist, oder dass das Verfahren zumindest zum Teil durch einen Datenübertragungsanalysator (212) durchgeführt wird, der auf der externen IT-Infrastruktur (200) installiert ist,
    wobei insbesondere die externe IT-Infrastruktur (200) ein zugeordnetes Kommunikationsprotokoll (KM) an das Fahrzeug (100) übermittelt.

4.  Verfahren nach Anspruch 1, wobei

    das Verfahren bei einem stehenden Fahrzeug (100), vorzugsweise in Vorbereitung auf einen Fahrbetrieb des Fahrzeuges (100), durchgeführt wird,
    und/oder dass das Verfahren in einem Offlinemodus einer Kommunikationseinheit (11) des Fahrzeuges (100), insbesondere bei einer deaktivierten Kommunikationseinheit (11) des Fahrzeuges (100), durchgeführt wird,
    und/oder dass beim Überprüfen der Datenübertragung (D) das Übertragungsmuster (M), insbesondere mithilfe eines Datenübertragungsanalysators (12, 212), geschätzt und/oder vorausgesagt wird.

5.  Verfahren nach einem der vorhergehenden Ansprüche, wobei das Verfahren mindestens einen weiteren Schritt aufweist:

    - Aufbau einer Kommunikationsverbindung mit dem korrespondierenden Kommunikationsprotokoll (KM), der für die Datenübertragung (D) in Abhängigkeit vom erkannten Übertragungsmuster (M) zugeordnet wurde,
    - Durchführen der Datenübertragung (D) mithilfe des mindestens einen korrespondierenden Kommunikationsprotokolls (KM), und/oder
    - Speichern des mindestens einen korrespondierenden Kommunikationsprotokolls (KM) als eine Voreinstellung.

6.  Verfahren nach einem der vorhergehenden Ansprüche, wobei

    ein dynamisches Umschalten eines aktuellen Kommunikationsprotokolls (KM) auf das korrespondierende Kommunikationsprotokoll (KM) durchgeführt wird, wenn beim Überprüfen erkannt wurde, dass sich das Übertragungsmuster (M) geändert hat, und/oder dass das Verfahren kontinuierlich, wiederholend und/oder regelmäßig durchgeführt wird; und/oder

die Verfahrensschritte nacheinander, zumindest teilweise gleichzeitig und/oder simultan durchgeführt werden; und/oder

mindestens eine korrespondierende Kommunikationsprotokoll (KM) für die Datenübertragung (D) eine korrespondierende Kommunikationsprotokolls-Kombination, insbesondere umfassend ein Anwendungsprotokoll und/oder ein Datenübertragungsprotokoll, umfasst.

7. Verfahren nach einem der vorhergehenden Ansprüche, wobei das Verfahren mindestens einen weiteren Schritt aufweist:

- Bewerten von Diensten (APP) im Fahrzeug (100) in Bezug auf die Übertragungsmuster (M),
- Zuordnen korrespondierender Kommunikationsprotokolle (KM) für die Dienste (APP) im Fahrzeug (100) in Abhängigkeit von den Übertragungsmustern (M),
- Kategorisieren von Diensten (APP) im Fahrzeug (100) in Bezug auf geeignete Kommunikationsprotokolle (KM), und/oder
- Nutzen von Kategorien der Dienste (APP) im Fahrzeug (100) für Voreinstellungen und/oder Standardeinstellungen; und/oder das Verfahren zur Beurteilung von Kommunikationsprotokollen (KM) verwendet wird, wobei das Verfahren mindestens einen weiteren Schritt aufweist:
- Bestimmen eines Einflusses der Übertragungsmuster (M) auf das Leistungsvermögen der Kommunikationsprotokolle (KM).

8. Verfahren nach einem der vorhergehenden Ansprüche, wobei das Übertragungsmuster (M) durch unterschiedliche Datenübertragungsparameter (x1, x2, ..., xn) bei der Datenübertragung (D) abgebildet wird, wobei insbesondere die Datenübertragungsparameter (x1, x2, ..., xn) die Datenübertragung (D) in Abhängigkeit von der Zeit abbilden.

9. Verfahren nach dem vorhergehenden Anspruch, wobei

die unterschiedlichen Datenübertragungsparameter (x1, x2, ..., xn) bei der Datenübertragung (D) mindestens einen von den folgenden Parametern und/oder eine Kombination von den folgenden Parametern aufweisen:

- Häufigkeit der Datenpakete,
- Größe der Datenpakete, und/oder
- zeitlicher Abstand zwischen den Datenpaketen.

10. Verfahren nach einem der vorhergehenden Ansprüche, wobei beim Zuordnen eines korrespondierenden Kommunikationsprotokolls (KM) für die Datenübertragung (D) unterschiedliche Leistungsparameter (p1, p2, ..., pn) verschiedener Kommunikationsprotokolle (KIM) berücksichtigt werden.

11. Verfahren nach dem vorhergehenden Anspruch, wobei

die unterschiedlichen Leistungsparameter (p1, p2, ..., pn) verschiedener Kommunikationsprotokolle (KM) mindestens einen folgenden Parameter aufweisen:

- Latenz (p2),
- Rechenleistung (p1),
- Durchsatz, und/oder
- Kanaldatenrate (p3),
- erweiterte IoT-Funktionen (p4).

12. Verfahren nach einem der vorhergehenden Ansprüche 9 oder 10, wobei die unterschiedlichen Leistungsparameter (p1, p2, ..., pn) verschiedener Kommunikationsprotokolle (KM) in gewichteter Form berücksichtigt werden, und/oder dass die unterschiedlichen Leistungsparameter (p1, p2, ..., pn) mit Gewichtungsfaktoren (w1, w2, ..., wn) versehen werden.

13. Steuereinheit (10), insbesondere für ein Fahrzeug (100), aufweisend:

eine Kommunikationseinheit (11) zum Aufbauen und/oder Durchführen einer Datenübertragung (D), insbesondere zwischen einem Fahrzeug (100) und einer externen IT-Infrastruktur (200), und

einen Datenübertragungsanalysator (12) zum Durchführen eines Verfahrens nach einem der vorhergehenden Ansprüche.

14. Fahrzeug (100) mit einer Steuereinheit (10) nach dem vorhergehenden Anspruch.

15. Computerprogrammprodukt, umfassend Befehle, die bei der Ausführung des Computerprogrammprodukts durch einen Computer diesen veranlassen, das Verfahren nach einem der vorhergehenden Ansprüche 1 bis 12 durchzuführen.

Fig. 1

Fig. 2

Fig. 3

Fig. 4

Fig. 5

Fig. 6

Europäisches
Patentamt

European
Patent Office

Office européen
des brevets

# EUROPÄISCHER RECHERCHENBERICHT

Nummer der Anmeldung

EP 21 18 6091

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 104 601 521 A (CHINA TELECOM CORP LTD) 6. Mai 2015 (2015-05-06) * Zusammenfassung * * Absatz [0039] – Absatz [0083] * ----- | 1-15 | INV. H04L29/06 H04L29/08 |
| X | ZHANG HONGLI ET AL: "An Adaptive Hierarchical Medium Access Control Protocol for Highly Dynamic Wireless Networks", 2019 IEEE 19TH INTERNATIONAL CONFERENCE ON COMMUNICATION TECHNOLOGY (ICCT), IEEE, 16. Oktober 2019 (2019-10-16), Seiten 385-390, XP033683324, DOI: 10.1109/ICCT46805.2019.8947048 [gefunden am 2019-12-31] * Abschnitt III * * Abschnitt IV.B * * Abbildung 1 * ----- | 1-15 | |
| X | ELMANGOUSH ASMA ET AL: "Application-derived communication protocol selection in M2M platforms for smart cities", 2015 18TH INTERNATIONAL CONFERENCE ON INTELLIGENCE IN NEXT GENERATION NETWORKS, IEEE, 17. Februar 2015 (2015-02-17), Seiten 76-82, XP032758459, DOI: 10.1109/ICIN.2015.7073810 [gefunden am 2015-03-31] * Seite 4, linke Spalte * ----- -/-- | 1-15 | RECHERCHIERTE SACHGEBIETE (IPC) H04L |

Der vorliegende Recherchenbericht wurde für alle Patentansprüche erstellt

| Recherchenort | Abschlußdatum der Recherche | Prüfer |
|---|---|---|
| Den Haag | 15. Dezember 2021 | Dely, Peter |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

**EP 21 18 6091**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ZHANG JIA JIA-ZHAN18@MAILS TSINGHUA EDU CN ET AL: "WiseTrans: Adaptive Transport Protocol Selection for Mobile Web Service", PROCEEDINGS OF THE 7TH ACM CONFERENCE ON INFORMATION-CENTRIC NETWORKING, ACMPUB27, NEW YORK, NY, USA, 19. April 2021 (2021-04-19), Seiten 284-294, XP058626697, DOI: 10.1145/3442381.3449958 ISBN: 978-1-4503-8312-7 * Abschnitt 3 * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| **Den Haag** | **15. Dezember 2021** | **Dely, Peter** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
    Dokument

EPO FORM 1503 03.82 (P04C03)

**Seite 2 von 2**

**ANHANG ZUM EUROPÄISCHEN RECHERCHENBERICHT
ÜBER DIE EUROPÄISCHE PATENTANMELDUNG NR.**

**EP 21 18 6091**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**15-12-2021**

| Im Recherchenbericht angeführtes Patentdokument | Datum der Veröffentlichung | Mitglied(er) der Patentfamilie | Datum der Veröffentlichung |
|---|---|---|---|
| CN 104601521 A | 06-05-2015 | KEINE | |

Für nähere Einzelheiten zu diesem Anhang : siehe Amtsblatt des Europäischen Patentamts, Nr.12/82

EPO FORM P0461